# EUROPÄISCHE PATENTANMELDUNG

(11) **EP 0 664 594 A1**
(43) Veröffentlichungstag der Anmeldung: **26.07.1995**
(21) Anmeldenummer: 95100763.2
(22) Anmeldetag: 19.01.1995
(51) Int. Cl.: H02H 6/00, F04B 49/10

(54) **Schutzschaltung für Pumpenmotoren**

(30) Priorität: 19.01.1994 DE 4401447
(71) Anmelder: RHEBAU Rheinische Beton- und Bauindustrie GmbH, 41541 Dormagen (DE)
(72) Erfinder: Kern,Engelbert, D-41541 Dormagen (DE); Gester,Thomas, D-41541 Dormagen (DE)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Es wird eine Schutzschaltung für Pumpenmotoren, insbesondere Motoren von Abwasserpumpen, die ein Abschalten des Motors bei Überlastung bewirkt, beschrieben. Die Schaltung umfaßt einen Stromwandler, dessen Sekundärstrom nach Gleichrichtung an ein Widerstands-Kondensator-Netzwerk gelegt wird, das die Wicklung des Pumpenmotors simuliert und den Stromverlauf durch die Motorwicklung kennzeichnende Signale zur Verfügung stellt. Diese Signale werden von einer Steuerlogik verarbeitet und ausgewertet. Die Steuerlogik betätigt in Abhängigkeit vom Erreichen eines einer vorgegebenen Motorlast entsprechenden Signalpegels einen Schalter zum Abschalten des Pumpenmotors. Die Schaltung hat den Vorteil, daß sie besonders rasch anspricht und eine exakte Steuerung des Pumpenmotors in Abhängigkeit von seiner Nennstromaufnahme ermöglicht.

## Beschreibung

Die vorliegende Erfindung betrifft eine Schutzschaltung für Pumpenmotoren, insbesondere Motoren von Abwasserpumpen, die ein Abschalten des Motors bei Überlastung bewirkt.

Es ist bekannt, zum Abschalten von Pumpenmotoren bei Überlastung sogenannte Thermoschalter zu verwenden. Bei einer Überlastung des Pumpenmotors, beispielsweise durch ein Festsitzen des Pumpenrades, einen Lagerschaden etc., steigt die Nennstromaufnahme des Motors an, was wiederum zu einem Erhitzen der Motorwicklungen und schließlich zum Durchschmoren des Motors führt. Um diese Schädigungen zu verhindern, greift der Thermoschalter die Wicklungstemperatur ab und bewirkt bei Erreichen einer vorgegebenen Grenztemperatur ein Abschalten des Motors. Nach entsprechender Abkühlung und Unterschreiten der Grenztemperatur wird der Motor wieder eingeschaltet.

Bei dem bekannten Thermoschutzschalter erfolgt somit ein Abschalten des Motors in Abhängigkeit von der Wicklungstemperatur. Das hat den Nachteil, daß der Motor erst dann abgeschaltet wird, wenn bereits eine erhöhte Nennstromaufnahme und eine damit verbundene, zu Schädigungen führende Erwärmung der Motorwicklungen stattgefunden hat. Der bekannte Schalter spricht daher nur verzögert auf eine Überlastung des Pumpenmotors an, so daß bereits Schädigungen am Motor eingetreten sein können.

Um dies zu vermeiden, kann man natürlich die Ansprechschwelle für das Abschalten des Motors entsprechend tief anordnen. Das hat jedoch den Nachteil, daß der Motor sehr früh abgeschaltet wird, so daß es sehr häufig zu Pendeleffekten, d. h. Abschalten-Einschalten-Abschalten etc., kommt. Es ist daher mit dem herkömmlich ausgebildeten Thermoschutzschalter nur bedingt möglich, eine genaue Überlastsicherung zur Verfügung zu stellen.

Der Erfindung liegt die Aufgabe zugrunde, eine Schutzschaltung für Pumpenmotoren der angegebenen Art zu schaffen, die besonders rasch auf eine Überlastung des Motors anspricht.

Diese Aufgabe wird erfindungsgemäß dadurch gelöst, daß in die Stromzuführleitung des Pumpenmotors ein Stromwandler geschaltet ist, dessen Sekundärstrom einem Gleichrichter zugeführt wird, daß der vom Gleichrichter gleichgerichtete Strom an ein die Wicklung des Pumpenmotors simulierendes Widerstands-Kondensator-Netzwerk gelegt ist, das den Stromverlauf durch die Motorwicklung kennzeichnende Signale zur Verfügung stellt, und daß diese Signale in einer Steuerlogik derart verarbeitet und ausgewertet werden, daß bei Erreichen eines einer vorgegebenen Motorlast entsprechenden Signalpegels einem Schalter zum Abschalten des Pumpenmotors ein Steuersignal zugeführt wird.

Bei der erfindungsgemäßen Lösung wird somit nicht die Überlastung des Motors indirekt durch Messung der Wicklungstemperatur erfaßt, sondern über eine Messung der Nennstromaufnahme des Motors selbst, wobei diese Nennstromaufnahme allerdings nicht an der Stromzuführleitung des Pumpenmotors selbst, sondern über einen Sekundärzweig erfaßt wird. In diesem Sekundärzweig befindet sich ein Widerstands-Kondensator-Netzwerk, das die Wicklung des Pumpenmotors simuliert. Der vom Stromwandler zur Verfügung gestellte Sekundärstrom zeigt das gleiche Verhalten wie der Motornennstrom. Wenn die Nennstromaufnahme des Motors bei Überlastung ansteigt, steigt auch der Sekundärstrom an. Das Widerstands-Kondensator-Netzwerk stellt dann den Stromverlauf durch die Motorwicklung kennzeichnende Signale zur Verfügung, die in einer Steuerlogik verarbeitet und ausgewertet werden. Entsprechende Analogsignale werden hierbei vorzugsweise in Digitalsignale umgewandelt, aufaddiert und mit einem einer vorgegebenen Motorlast bzw. Nennstromaufnahme entsprechenden Signalpegel verglichen. Bei Erreichen bzw. Überschreiten des vorgegebenen Signalpegels erzeugt die Steuerlogik ein Steuersignal, das dem Schalter zum Abschalten des Pumpenmotors zugeführt wird. Es erfolgt somit ein Abschalten des Pumpenmotors, und zwar nicht erst bei Erreichen eines vorgegebenen Temperaturniveaus der Motorwicklungen, sondern bereits bei Erreichen einer vorgegebenen Nennstromaufnahme des Motors, so daß der Motor insgesamt früher abgeschaltet wird und eine exaktere Anpassung an den tatsächlichen Stromverlauf durch die Motorwicklung erfolgt. Die erfindungsgemäß vorgesehene Schutzschaltung kennzeichnet den Stromverlauf durch die Motorwicklung daher wesentlich genauer als dies die Temperaturentwicklung der Wicklung tut.

Neben dem schnelleren und genaueren Ansprechverhalten der erfindungsgemäß ausgebildeten Schutzschaltung besteht ein weiterer Vorteil darin, daß erfindungsgemäß zur Messung der Nennstromaufnahme ein Umweg über einen Niederstromzweig gewählt wird, um eine galvanische Trennung vom Leistungszweig zu erreichen. Entsprechende Störungen im Leistungszweig, wie beispielsweise Kurzschlüsse, Durchschmoren der Wicklung, wirken sich daher nicht auf den Niederstromzweig und damit die erfindungsgemäß ausgebildete Schutzschaltung aus. Ein herkömmlicher Thermoschutzschalter würde hingegen durch entsprechende Störungen im Leistungszweig mit beschädigt.

Bei der erfindungsgemäß ausgebildeten Schutzschaltung kann der Stromwandler beispielsweise mit einem Übersetzungsverhältnis von 1:10 arbeiten, so daß bei einem Nennstrom von 2 A der Sekundärstrom 200 mA beträgt. Wie erwähnt, steigt mit einem Anstieg der Nennstromaufnahme auch der Sekundärstrom des Wandlers proportional an, so daß der Sekundärstrom exakt proportionale Nennstromverhältnisse wiedergibt.

Der Schalter zum Abschalten des Pumpenmotors ist vorzugsweise ein Relais.

In Weiterbildung der erfindungsgemäß ausgebildeten Schutzschaltung ist diese über die manuelle Betätigung eines Netzschalters rücksetzbar. Die Schutzschaltung wird daher nicht durch die Steuerlogik selbst rückgesetzt, wenn der der vorgegebenen Motorlast ensprechende Signalpegel wieder unterschritten wird, sondern zur Zurücksetzung muß ein Netzschalter von einer Bedienungsperson manuell betätigt werden. Auf diese Weise wird eine Pendelschaltung bei selbsttätiger Rücksetzung durch die Elektronik verhindert. Durch die Betätigung des Netzschalters wird die gesamte Anlage spannungsfrei, d. h. sämtliche gesetzten Signale werden auf ihre Ausgangspegel zurückgeführt.

Die Anlage wird durch erneutes Betätigen des Netzschalters nach Ablauf einer bestimmten Zeitspanne, beispielsweise 5 min, wieder eingeschaltet, so daß der Motor wieder anlaufen kann. Ist die Störung, die die Überlastung des Motors bewirkt hat, noch vorhanden, erfolgt nach Erreichen der vorgegebenen Nennstromaufnahme erneut ein Abschalten des Motors über die Steuerlogik.

Vorzugsweise ist der Schutzschaltung eine akustische und/oder optische Alarmeinrichtung zugeordnet, die das Abschalten des Pumpenmotors über die Steuerlogik anzeigt. Durch dieses Alarmsignal, das gleichzeitig mit dem Abschalten abgegeben wird, wird die Bedienungsperson auf die Überlastung des Pumpenmotors aufmerksam gemacht, so daß sie nunmehr den Netzschalter zum Abschalten der Anlage betätigen muß. Nach Einhalten der erwähnten Wartezeit von ca. 5 min schaltet sie durch Betätigung des Netzschalters die Anlage wieder ein. Wenn die Störung noch vorhanden ist, wird die Alarmeinrichtung wieder in Betrieb genommen, so daß erneut abgeschaltet werden muß. Dieser Vorgang wiederholt sich so lange, bis die Störungsursache beseitigt ist.

In Weiterbildung der Erfindung verarbeitet und auswertet die Steuerlogik die Signale der Steuerlogik derart, daß sie bei Überschreiten eines zweiten niedrigeren Signalpegels sowie einer vorgegebenen Signaldauer ein Steuersignal zum Abschalten des Pumpenmotors abgibt. Bei dieser Ausführungsform berücksichtigt somit die Steuerlogik zusätzlich die Signaldauer. Bei bestimmten Störungen, beispielsweise bei einem Lagerschaden der Pumpe, erfolgt ein relativ geringer Anstieg der Nennstromaufnahme des Motors, der jedoch mit zunehmender Dauer des Schadens größer wird. Bei dieser Ausführungsform der Schutzschaltung sind daher als Kriterien zum Abschalten des Motors ein zweiter niedrigerer Signalpegel und eine vorgegebene Signaldauer zugrundegelegt. Wenn daher ein bestimmter Signalpegel über eine vorgegebene Zeitspanne aufrechterhalten wird, was auf einen möglichen Pumpenlagerschaden hindeutet, wird der Motor ebenfalls abgeschaltet. Hierdurch wird ein Ausweiten des Lagerschadens verhindert.

Zweckmäßigerweise besitzt die Schutzschaltung eine Sicherungs- und Spannungsüberwachungsschaltung für die Stromzuführleitung des Pumpenmotors, die bei Störungen eine zusätzliche Störungsanzeige ansteuert. Diese Schaltung ist zusätzlich zu der vorstehend beschriebenen Motorschutzschaltung vorgesehen und dient zur Überwachung der Stromzuführleitung, um auf diese Weise sicherzustellen, daß die vorstehend beschriebene Schutzschaltung korrekt funktioniert. Findet beispielsweise durch eine defekte Sicherung oder eine Leitungsunterbrechung bei eingeschaltetem Netzschalter keine Stromzuführung statt, erzeugt die Sicherungs- und Spannungsüberwachungsschaltung durch Ansteuerung einer zusätzlichen Störungsanzeige ein zusätzliches Alarmsignal. Dieses Alarmsignal unterscheidet sich jedoch von dem Alarmsignal, das bei der vorstehend beschriebenen Überlastung des Pumpenmotors abgegeben wird. Beispielsweise wird bei Überlastung des Pumpenmotors gleichzeitg ein optisches und akustisches Alarmsignal erzeugt, während bei der zuletzt genannten Leitungsunterbechung bzw. defekten Sicherung nur ein akustisches Signal abgegeben wird. Die Bedienungsperson kann daher unterscheiden, ob der Pumpenmotor durch Überlastung oder durch eine fehlerhafte Leitung bzw. Sicherung abgeschaltet hat.

Die vorstehend beschriebene Problematik der Überlastung von Pumpenmotoren ist insbesondere bei Abwasserpumpen von Kläranlagen relevant, da durch das vorhandene Fördermedium oft Blockierungen der Pumpenwellen etc. auftreten können. Die Erfindung schlägt daher vor, die vorstehend beschriebene Schutzschaltung als Teil der Steuerungsanlage einer Kläranlage auszubilden, mit der insbesondere der Pumpenbetrieb der Kläranlage überwacht bzw. gesteuert wird. So dient die Schutzschaltung vorzugsweise zur Überwachung des Motors von mindestens einer Abwasserpumpe der Kläranlage.

Beispielsweise besitzt eine derartige Kläranlage ein Vorklärbecken zur Vorreinigung der eingeleiteten Abwässer, bei dem es sich beispielsweise um eine Mehrkammer-Absetzgrube mit Schlammspeicher handeln kann. In der Mehrkammergrube werden Fest- und Schwimmstoffe zurückgehalten, wobei sich Schlamm absetzt. Das vorbehandelte Abwasser fließt in die biologische Stufe, die beispielsweise aus einem geeigneten Tropfkörper bestehen kann. Das Abwasser durchrieselt den Tropfkörper. Das am Tropfkörperfuß ausfließende Abwasser sammelt sich in einem Pumpen-/Kontrollschacht und wird von dort über eine erste Pumpe in einen Beschickungszylinder eines Nachklärbeckens geleitet. Im Nachklärbecken beruhigt sich das Abwasser, wobei sich noch vorhandene Restschlammteilchen absetzen. Danach fließt das geklärte Abwasser in einen Vorfluter. Über eine zweite Pumpe wird Schlamm, der sich im Nachklärbecken abgesetzt hat, in die erste Kammer der Vorklärung zurückgeführt.

Die beiden im Pumpen-/Kontrollschacht angeordneten und dem Nachklärbecken zugeordneten Pumpen sind hierbei mit der erfindungsgemäß ausgebildeten Schutzschaltung versehen.

Nachfolgend wird ein Ausführungsbeispiel einer erfindungsgemäß ausgebildeten Schutzschaltung in Verbindung mit der Zeichnung im einzelnen erläutert. Die Schutzschaltung ist hierbei als Teil einer Steueranlage einer Kläranlage ausgebildet. Es zeigen:
- Figur 1: ein Blockschaltbild einer Steueranlage für eine Kläranlage, die zwei Schutzschaltungen für zwei Pumpenmotoren aufweist; und
- Figur 2: ein Blockschaltbild einer Schutzschaltung.

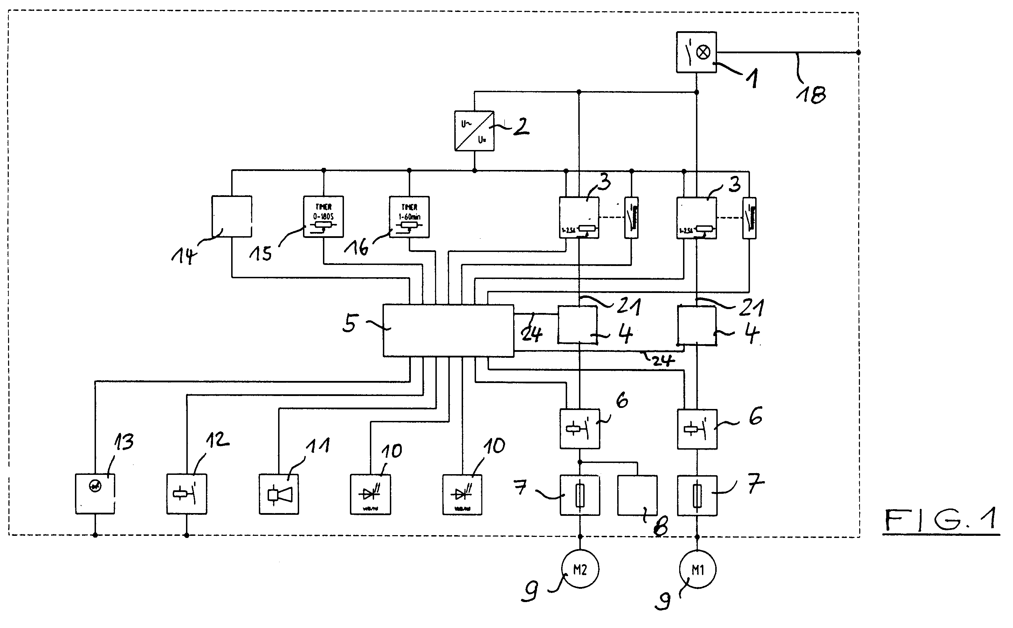

Die in Figur 1 dargestellte Steueranlage dient zur Steuerung und Überwachung der im vorstehenden Text beschriebenen Kläranlage, die zwei Pumpen aufweist, deren Motoren in Figur 1 mit dem Bezugszeichen 9 gekennzeichnet sind.

Das Blockschaltbild der Figur 1 zeigt eine Stromzuführleitung 18, die Strom aus einem geeigneten Netz den Motoren 9 der beiden Pumpen zuführt. Die Leitung 18 führt zu einem manuell betätigbaren Netzschalter 1, über den die Stromzufuhr zu den Motoren 9 und der Steueranlage gestoppt und wieder eingeschaltet werden kann. Nach dem Schalter 1 teilt sich die Stromzuführleitung 18 in drei Zweige, von denen zwei die Stromversorgungsleitungen der beiden Motoren 9 bilden, während der dritte über einen Steuertrafo 2 die Stromversorgung der Steueranlage übernimmt.

In die Stromversorgungszweige der beiden Motoren 9 sind Stromüberwachungsschaltungen 3 geschaltet. Die Leitungen führen dann zu zwei Schutzschaltungen 4, die nachfolgend im einzelnen erläutert werden. Von hier aus führen sie über zwei Relais 6 und zwei Sicherungen 7 zu den Motoren 9. Dem einen Zweig ist ein Betriebsstundenzähler 8 zugeschaltet.

Die Steueranlage weist eine Steuerlogik 5 auf, die die Steuerung der Schaltrelais 6, von optischen Anzeigen 10 (LEDs), einer akustischen Alarmvorrichtung 11 (Hupe), eines Relais 12 für eine externe Hupe und eines Alarmschwimmers 13, der zusätzlich zur Überwachung einer Pumpe dient, durchführt. Eine entsprechende Netz- und Logik-Überwachung 14 sowie Timer 15, 16, die die Betriebsdauer einer Pumpe festlegen, und die Stromüberwachungsschaltungen 3 beaufschlagen die Steuerlogik 5 mit entsprechenden Eingangssignalen.

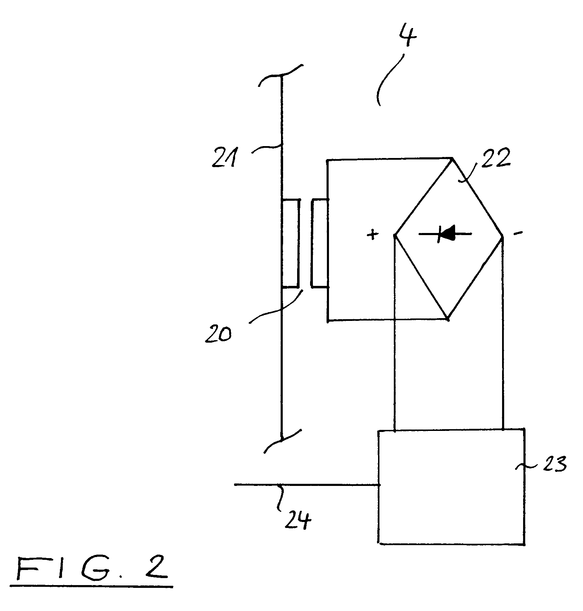

Figur 2 zeigt den schematischen Aufbau einer Schutzschaltung 4 für den Motor 9 der zugehörigen Pumpe. Der entsprechende Zweig 21 der Stromzuführleitung für den Pumpenmotor 9 speist einen Stromwandler 20, der ein Übersetzungsverhältnis von 1:10 besitzt. Bei einem Nennstrom von 2 A liefert die Sekundärwicklung des Wandlers daher einen Strom von 200 mA.

Der entsprechende Wechselstrom wird über einen Gleichrichter 22 gleichgerichtet und einem Widerstands-Kondensator-Netzwerk (R/C-Netzwerk) 23 zugeführt, das die Wicklung des Pumpenmotors 9 simuliert und den Stromverlauf durch die Motorwicklung kennzeichnende Signale über die Leitung 24 an die Steuerlogik 5 legt. Diese Analogsignale werden von der Steuerlogik in Digitalsignale umgewandelt, dort aufaddiert und einem Komparator zugeführt, in dem sie mit einem einer vorgegebenen Motorlast entsprechenden Signalpegel verglichen werden. Bei Erreichen bzw. Überschreiten des Signalpegels gibt die Steuerlogik 5 ein Signal an das entsprechende Schaltrelais 6 ab, mittels dem die Stromzufuhr zum Pumpenmotor 9 gestoppt wird.

Beide Pumpenmotoren 9 werden in der vorstehend beschriebenen Weise überwacht.

Erfindungsgemäß wird somit eine elektronische Pumpenmotorstromüberwachung durchgeführt. Durch das verwendete Widerstands-Kondensator-Netzwerk werden die thermischen Motoreigenschaften nachgebildet. Die am Ausgang des Widerstands-Kondensator-Netzwerks anstehende Spannung ist somit direkt proportional zur Wicklungstemperatur des Motors. Die entsprechende Spannung (Steuersignale) wird der Steuerlogik zugeführt. In dem erwähnten Komparator erfolgt ein Vergleich mit einem Signalpegel der für jeden Motortyp eingestellten, gerade noch zulässigen Wicklungstemperatur.

## Patentansprüche

1. Schutzschaltung für Pumpenmotoren, insbesondere Motoren von Abwasserpumpen, die ein Abschalten des Motors bei Überlastung bewirkt, dadurch gekennzeichnet, daß in die Stromzuführleitung (18, 21) des Pumpenmotors (9) ein Stromwandler (20) geschaltet ist, dessen Sekundärstrom einem Gleichrichter (22) zugeführt wird, daß der vom Gleichrichter (22) gleichgerichtete Strom an ein die Wicklung des Pumpenmotors (9) simulierendes Widerstands-Kondensator-Netzwerk (23) gelegt ist, das den Stromverlauf durch die Motorwicklung kennzeichnende Signale zur Verfügung stellt, und daß diese Signale in einer Steuerlogik (5) derart verarbeitet und ausgewertet werden, daß bei Erreichen eines einer vorgegebenen Motorlast entsprechenden Signalpegels einem Schalter (6) zum Abschalten des Pumpenmotors (9) ein Steuersignal zugeführt wird.

2. Schutzschaltung nach Anspruch 1, dadurch gekennzeichnet, daß der Schalter (6) zum Abschalten des Pumpenmotors (9) ein Relais ist.

3. Schutzschaltung nach Anspruch 1 oder 2, dadurch gekennzeichnet, daß sie über die manuelle Betätigung eines Netzschalters (1) rücksetzbar ist.

4. Schutzschaltung nach einem der vorangehenden Ansprüche, dadurch gekennzeichnet, daß ihr eine akustische und/oder eine optische Alarmeinrichtung (10, 11) zugeordnet ist, die das Abschalten des Pumpenmotors (9) anzeigt.

5. Schutzschaltung nach einem der vorangehenden Ansprüche, dadurch gekennzeichnet, daß die Steuerlogik (5) die Signale derart verarbeitet und auswertet, daß sie bei Überschreiten eines zweiten niedrigeren Signalpegels sowie einer vorgegebenen Signaldauer ein Steuersignal zum Abschalten des Pumpenmotors abgibt.

6. Schutzschaltung nach einem der vorangehenden Ansprüche, dadurch gekennzeichnet, daß sie eine Sicherungs- und Spannungsüberwachungsschaltung für die Stromzuführleitung (1, 21) des Pumpenmotors (9) aufweist, die bei Störungen eine zusätzliche Störungsanzeige ansteuert.

7. Schutzschaltung nach einem der vorangehenden Ansprüche, dadurch gekennzeichnet, daß sie Teil der Steuerungsanlage einer Kläranlage ist.

8. Schutzschaltung nach Anspruch 7, dadurch gekennzeichnet, daß sie zur Überwachung des Motors von mindestens einer Abwasserpumpe der Kläranlage dient.

9. Schutzschaltung nach Anspruch 8, dadurch gekennzeichnet, daß sie dem Motor einer in einem Pumpen-/Kontrollschacht und dem Motor einer in einem Nachklärbecken der Kläranlage angeordneten Pumpe zugeordnet ist.
